# EUROPEAN PATENT SPECIFICATION

(11) **EP 1 858 905 B1**
(45) Date of publication and mention of the grant of the patent: **18.05.2011**
(21) Application number: 06729604.6
(22) Date of filing: 15.03.2006
(51) Int. Cl.: C07F 7/08, C08K 5/54, C08G 59/00

(54) **ORGANOTRISILOXANE, ITS PREPARATION AND ITS USE IN CURABLE RESIN COMPOSITION**
ORGANOTRISILOXAN, SEINE HERSTELLUNG UND SEINE VERWENDUNG IN EINER HÄRTBAREN HARZZUSAMMENSETZUNG
ORGANOTRISILOXANE, PREPARATION ET UTILISATION DANS UNE COMPOSITION DE RESINE DURCISSABLE

(30) Priority: 15.03.2005 JP 2005072394
(43) Date of publication of application: 28.11.2007
(73) Proprietor: Dow Corning Toray Co., Ltd., Tokyo 100-0005 (JP)
(72) Inventor: UEKI, Hiroshi, Ichihara-shi, Chiba, 2990108 (JP); ISSHIKI, Minoru, Ehime, 7913120 (JP); MORITA, Yoshitsugu, Ichihara-shi, Chiba, 2990108 (JP); KATO, Tomoko, Ichihara-shi, Chiba, 2990108 (JP)
(74) Representative: Russell, Lindsey
(86) International application number: PCT/JP2006/305637
(87) International publication number: WO 2006/098491

(56) References cited:
- US-A- 4 430 235
- DATABASE CA [Online] CHEMICAL ABSTRACTS SERVICE, COLUMBUS, OHIO, US; HOU, QINGPU ET AL: "Modification of epoxy resins with phenolic hydroxyl-terminated polysiloxane" XP002385716 retrieved from STN Database accession no. 124:57780 & CHINESE JOURNAL OF POLYMER SCIENCE , 13(3), 235-43 CODEN: CJPSEG; ISSN: 0256-7679, 1995,
- DATABASE CA [Online] CHEMICAL ABSTRACTS SERVICE, COLUMBUS, OHIO, US; KNIGHT, GRAHAM J.: "A comparison of the thermal stabilities of a siloxane substituted polycarbonate with a standard polycarbonate and a polydimethylsiloxane" XP002385717 retrieved from STN Database accession no. 91:92105 & BRITISH POLYMER JOURNAL , 10(3), 187-90 CODEN: BPOJAB; ISSN: 0007-1641, 1978,

## Description

### Technical Field

The present invention relates to a novel organotrisiloxane that contains an organic group with a phenolic hydroxyl group, and an aryl group. The invention also relates to a method of manufacturing the aforementioned organotrisiloxane, a curable resin composition that contains the aforementioned organotrisiloxane, and a product obtained by curing the above composition.

### Background Art

Japanese Unexamined Patent Application Publication No. (hereinafter referred to as "Kokai") S63-199220, Kokai H9-151253, and U.S. Patent No. 4,430,235 disclose a linear-chain organopolysiloxane that contains an organic group with a phenolic hydroxyl group. Kokai H2-117682 and Kokai H3-20324 disclose a disiloxane that contains an organic group with a phenolic hydroxyl group.

However, the linear-chain organopolysiloxane that contains an organic group with a phenolic hydroxyl group has low reactivity and poor compatibility with curable resins, such as epoxy resins. On the other hand, the disiloxane that contains an organic group with a phenolic hydroxyl group has excellent reactivity, and when it is compounded with a curable resin, such as an epoxy resin, a problem occurs in view of high rigidity of the obtained cured body and low adhesion thereof to a substrate.

It is an object of the present invention to provide a novel organotrisiloxane that contains an organic group with phenolic hydroxyl group, and an aryl group, and that possesses good reactivity and excellent dispersibility and miscibility relative to curable resins, such as epoxy resins. The invention also relates to a method of manufacturing the aforementioned organotrisiloxane, and to a curable resin composition that contains the aforementioned organotrisiloxane, and to a cured product obtained from the above composition.

### Disclosure of Invention

The organotrisiloxane of the present invention is represented by the following general formula: 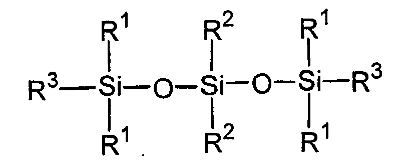 (wherein R¹ and R² may be the same or different and designate optionally substituted univalent hydrocarbon groups that do not have aliphatically unsaturated bonds, with the proviso that at least one of R¹ or R² is an aryl group, and R³ designates an organic group that contains a phenolic hydroxyl group).

The method of the invention for manufacturing an organotrisiloxane of the invention is characterized by carrying out a hydrosilylation reaction between a phenolic compound that contains an aliphatically unsaturated hydrocarbon group and an organotrisiloxane represented by the following general formula: 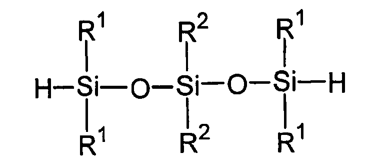 (wherein R¹ and R² may be the same or different and designate optionally substituted univalent hydrocarbon groups that do not have aliphatically unsaturated bonds, with the proviso that at least one of R¹ or R² is an aryl group).

The curable resin composition of the invention is characterized by comprising: a curable resin and the aforementioned organotrisiloxane.

The cured product of the invention is characterized by being obtained as a result of curing the aforementioned curable resin composition.

### Effects of Invention

The organotrisiloxane of the present invention is a novel compound that possesses good reactivity and excellent compatibility and dispersibility with respect to the curable resins, such as epoxy resin. The method of the invention can be used for efficient production of such novel compounds, and since the composition of the invention contains the aforementioned novel compound, it demonstrates good curability and adhesion to substrates, while a cured body obtained from the composition of the invention also demonstrates good adhesion to various substrates.

### Brief Description of the Drawings

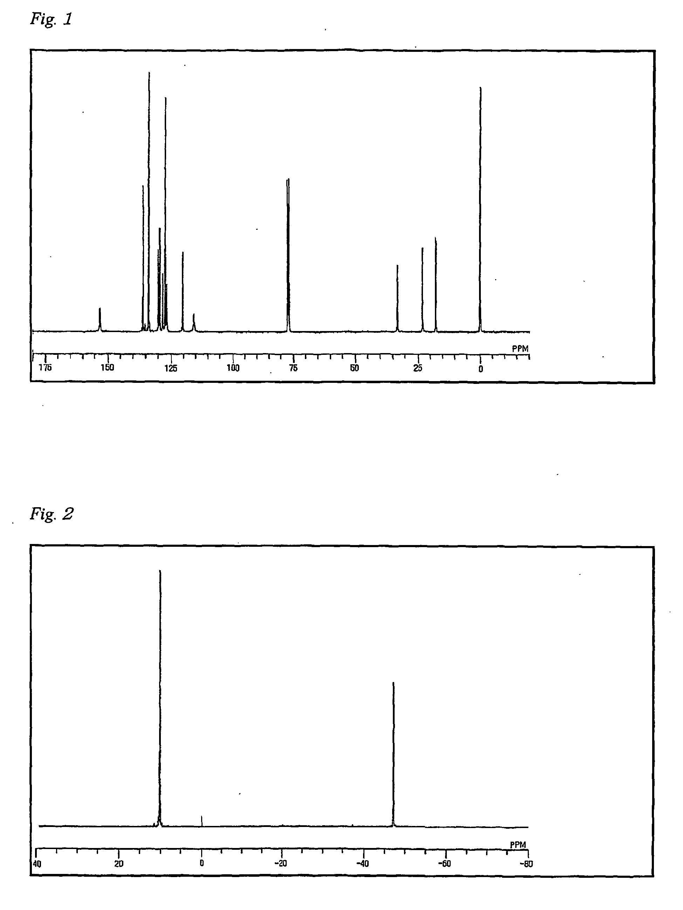

Fig. 1 is a ¹³C-NMR spectral chart of organotrisiloxane prepared in Application Example 1.

Fig. 2 is a ²⁹Si-NMR spectral chart of organotrisiloxane prepared in Application Example 1.

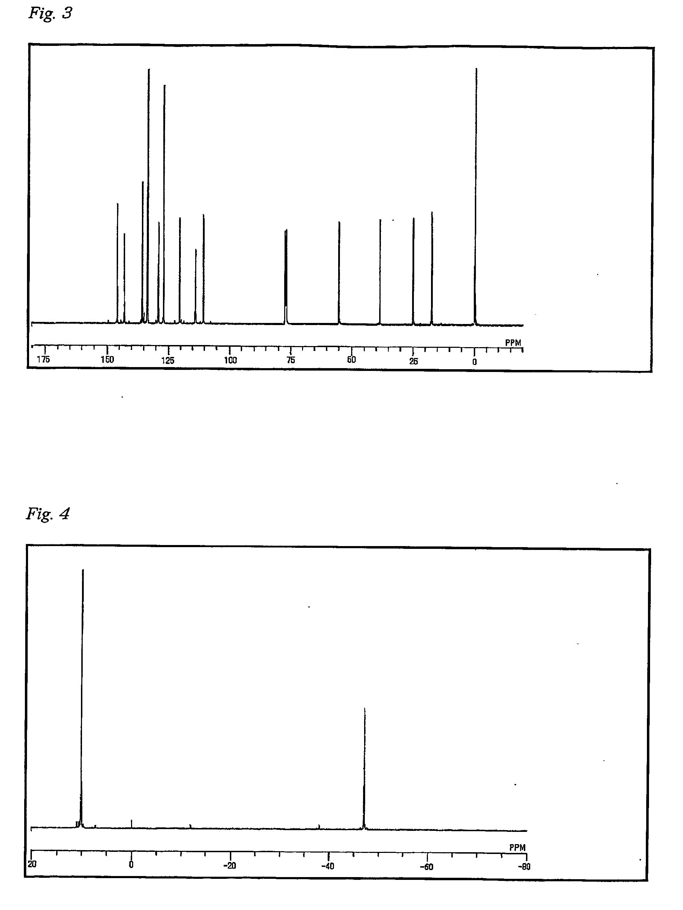

Fig. 3 is a ¹³C-NMR spectral chart of organotrisiloxane prepared in Application Example 2.

Fig. 4 is a ²⁹Si-NMR spectral chart of organotrisiloxane prepared in Application Example 2.

### Detailed Description of the Invention

The organotrisiloxane of the present invention is characterized by the following general formula:

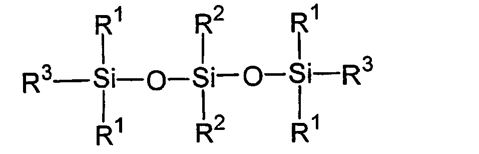

In this formula, R¹ and R² may be the same or different and designate optionally substituted univalent hydrocarbon groups that do not have aliphatically unsaturated bonds. The following are specific examples of such univalent hydrocarbon groups: methyl, ethyl, propyl, butyl, pentyl, hexyl, or similar alkyl groups; phenyl, tolyl, xylyl, or similar aryl groups; benzyl, phenethyl, or similar aralkyl groups; 3-chloropropyl, 3,3,3-trifluoropropyl, or similar halogenated alkyl groups. It is required, however, that in the above formula at least one of R¹ or R² is an aryl group, and preferably, that R¹ is an alkyl group and R² is an aryl group. It is especially preferable that R¹ is a methyl group and R² is a phenyl group. It is recommended that R³ in the above formula is an organic group having a phenolic hydroxyl group. More specifically, there are no special restrictions with regard to the aforementioned organic group, provided that this group has a hydroxyl group bonded to an aromatic ring, but it is recommended that this group is expressed by the following formula:

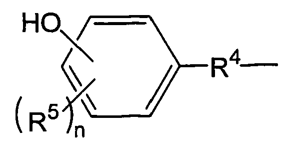

In the above formula, R⁴ is an alkylene group, more specifically, an ethylene, propylene, methylethylene, or a butylene group, preferably a propylene group.

Furthermore, in the above formula, R⁵ is an alkyl group or an alkoxy group; R⁵ as an alkyl group can be exemplified by a methyl, ethyl, propyl, butyl, pentyl, or hexyl group. R⁵ as an alkoxy group can be exemplified by a methoxy, ethoxy, propoxy, or butoxy group. In the above formula, "n" is 0 or 1.

The aforementioned organotrisiloxane can be exemplified by the following compounds:

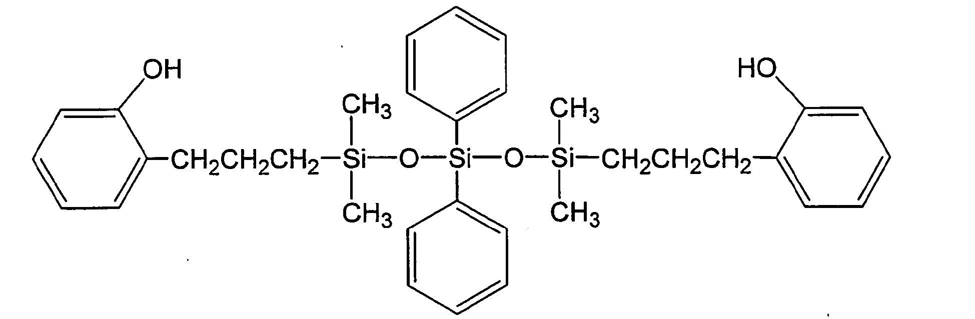

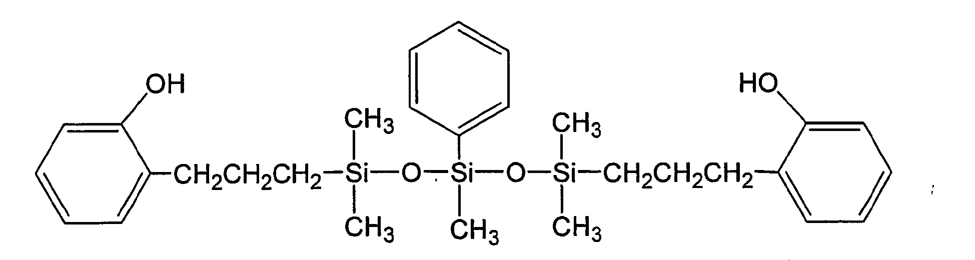

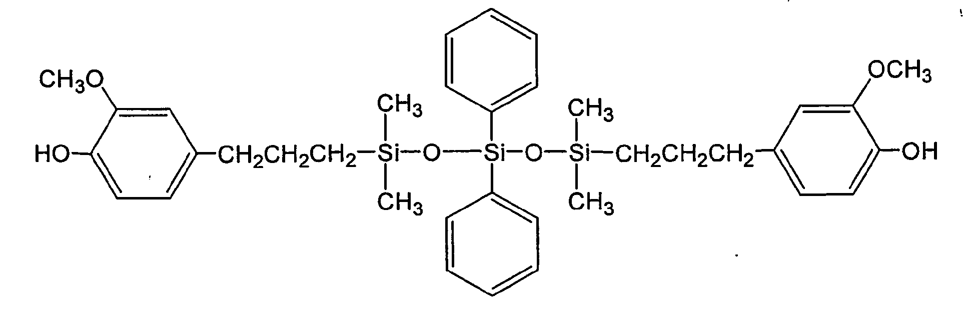

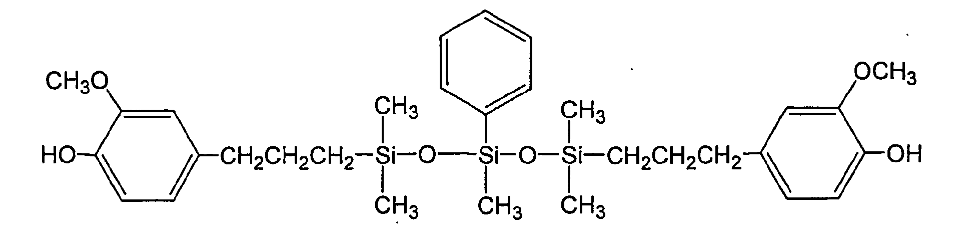

The manufacturing method of the present invention is characterized by carrying out a hydrosilylation reaction between a phenolic compound that contains an aliphatically unsaturated hydrocarbon group and an organotrisiloxane represented by the following general formula:

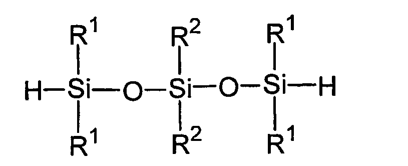

In the above formula, R¹ and R² may be the same or different and designate optionally substituted univalent hydrocarbon groups that do not have aliphatically unsaturated bonds. At least one of R¹ or R² should be an aryl group. Preferably, R¹ should be an alkyl group and R² a phenyl group.

There are no special restrictions with regard to the structure of the aforementioned phenolic compound, provided that its molecule contains an unsaturated aliphatic hydrocarbon group. It is preferable, however, that a molecule of the phenolic compound contain an alkyl group. The aforementioned phenolic compound should preferably be represented by the following general formula:

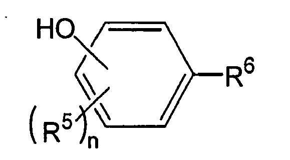

In the above formula, R⁵ is an alkyl or alkoxy group. These groups may be the same as exemplified above. R⁶ designate an alkenyl group. Specific examples of the alkenyl group are vinyl groups, allyl groups, and butenyl groups, of which allyl groups are preferable. In the above formula, "n" is 0 or 1, and a preferable phenolic group is arylphenol or eugenol.

The hydrosilylation reaction between the aforementioned organotrisiloxane and the phenolic group with an unsaturated aliphatic hydrocarbon group may be carried out with the use of a hydrosilylation catalyst. Such a catalyst may be exemplified by a platinum-type catalyst, rhodium-type catalyst, or a palladium-type catalyst, of which the platinum-type catalyst is preferable. The following are specific example of such platinum-type catalysts: platinum black, chloroplatinic acid, alcohol-modified chloroplatinic acid, platinum-olefin complex, platinum-alkenylsiloxane complex, or a platinum-carbonyl complex. The hydrosilylation reaction can be carried out at room temperature but for acceleration of the process the reaction can be carried out with heating. There are no special restrictions with regard to proportions in which the organotrisiloxane and phenolic compound can be used, but it may be recommend that a mole ratio of silicon-bonded hydrogen atoms contained in the organotrisiloxane to unsaturated aliphatic hydrocarbon groups contained in the phenolic compound be within the range of (1:1) to (1:10), preferably (1:1) to (1:3). If the aforementioned ratio is below the lower recommended limit, the target organotrisiloxane will be produced with a low yield, and if, on the other hand, the mole ratio exceeds the upper recommended limit, the product will contain a large amount of an unreacted phenolic compound, and, in some cases, this may lead to decrease in purity of the obtained organotrisiloxane.

In the hydrosilylation reaction, attention has to be paid to the use of an organic solvent. An organic solvent suitable for the hydrosilylation reaction may be hexane, octane, or a similar aliphatic hydrocarbon; toluene, xylene, or a similar aromatic hydrocarbon; butyl acetate, ethyl acetate, or a similar ester; diethyl ether, dibutyl ether, dioxane, or a similar ether; acetone, methylethylketone, methylisobutylketone, cyclohexanone, or a similar ketone. Upon completion of the hydrosilylation reaction, the obtained organotrisiloxane is purified by removing the organic solvent and unreacted phenol compound by heating the reaction mixture under a reduced pressure.

The curable resin composition of the invention is characterized by comprising: a curable resin and the aforementioned organotrisiloxane.

There are no special restrictions with regard to a curable resin that constitutes one of the main components of the composition of the invention. The following are specific examples of such resins: an epoxy resin, phenolic resin, formaldehyde resin, xylene resin, xylene-formaldehyde resin, ketone-formaldehyde resin, furane resin, urea resin, imide resin, melamine resin, alkyd resin, unsaturated polyester resin, aniline resin, sulfonamide resin, or their copolymerizable organic resin; silicone-modified organic resins with organosilyl groups or organosiloxy groups partially bonded to the aforementioned curable organic resins; or a mixture of two or more of the aforementioned organic resins. Most preferable are epoxy resin, imide resin, or phenolic resin. There are no special restrictions with regard to the mechanism of curing of the aforementioned curable resin. For example, the resins can be cured by heating, radiation with ultraviolet rays, radiation with high-energy rays, or by holding in a humid air. Curing by heating is most preferable.

The above-described curable resins can be combined with some arbitrary components, such as curing agents, curing accelerators, etc. The curing agents may be exemplified by carboxylic acids, sulfonic acids, or a similar organic acids, hydrates of the aforementioned acids, an organic hydroxyl compounds, organic silicon compounds that contain silanol groups, halogen groups, or the like, primary or secondary amino compounds, silicone resins that contain silanol groups, silicone oils that contain silanol groups, or combinations of two or more of the above compounds. The curing accelerators may be represented by tertiary amino compounds, organic metal salts, such as organic salts of aluminum, zirconium, etc., phosphines such as organic phosphates, heterocyclic amino compounds, complex boron compounds, organic ammonium salts, organic sulfonium salts, organic peroxides, hydrosilation catalysts, etc.

As has been mentioned above, the above-described organotrisiloxane is a component that is used for protecting the composition of the invention from the loss of flowability prior to curing, as well as for improving tightness of contact and adhesion with respect to various substrates after curing. There are no special restrictions in regard to the amount in which the organotrisiloxane can be added. It is recommended, however, to add it in an amount of 0.01 to 100 parts by weight, preferably 0.1 to 50 parts by weight per 100 parts by weight of the curable resin that constitutes the main component. If the aforementioned organotrisiloxane is added in an amount smaller than the lower recommended limit, this will impair tightness of contact and adhesion of the obtained curable resin composition with respect to various substrates. If, on the other hand, the added amount of the organotrisiloxane exceeds the upper recommended limit, a cured body of the composition will have reduced mechanical characteristics.

The composition of the invention may be compounded with various arbitrary components such as sensitizers, metal salts of higher fatty acids, ester-type waxes, plasticizers, flexibilizer, fillers, silane coupling agents, etc. The flexibility imparters can be represented by silicone oils and silicone rubbers. The fillers may be comprised of glass fibers, aluminum fibers, ceramic fibers having alumina and silica as their components, boron fibers, zirconia fibers, silicon carbide fibers, metal fibers, polyester fibers, aramid fibers, Nylon fibers, phenol fibers, natural animal and vegetable fibers, or other fibrous fillers, as well as powders of fused silica, precipitated silica, fumed silica, baked silica, zinc oxide, baked clay, carbon black, glass beads, alumina, talc, calcium carbonate, clay, aluminum hydroxide, barium sulfate, titanium dioxide, aluminum nitride, silicon carbide, magnesium oxide, beryllium oxide, kaolin, mica, zirconia, etc. The above fillers can be used in combinations of two or more. Silane coupling agents can be represented by vinyltrimethoxysilane, allyltrimethoxysilane, allyltriethoxysilane, 3-glycidoxypropyl-trimethoxysilane, 3-methacryloxypropyl-trimethoxysilane, 3-amonopropyl-triethoxysilane, and N-(2-aminoethyl)-3-aminopropyl-trimethoxysilane.

The composition of the invention is prepared by uniformly mixing the aforementioned curable resin, organotrisiloxane, and, if necessary, other arbitrary components. There are no limitations with regard to methods of mixing. For example, the components can be mixed with the use of a single or biaxial mixer, two-roll mill, Ross mixer, or a kneader-mixer.

A cured product of the invention is obtained by curing the curable resin composition described above. Since the obtained cured product has excellent adhesive properties, it can be used as a sealer, adhesive agent, or a coating material for parts of electronic and electrical devices.

### Examples

The organotrisiloxane of the invention, the method of manufacturing thereof, the curable resin composition of the invention, and the cured product will be further described in detail with reference to application and comparative examples. The appearance and viscosity of the curable resin composition, as well as the composite modulus of elasticity and adhesive properties of the cured product were evaluated by the methods described below.

### [Appearance]

A curable resin composition was prepared without fine silica powder and curing accelerator (amine-type catalyst), and the appearance of the composition was visually observed after vacuum defoaming.

### [Viscosity]

Viscosity of the curable resin composition at 25°C was measured with the use of an E-type viscometer (the product of Tokimec, Inc., digital viscometer, Model DV-U-E Type II), under the following conditions: speed of rotation 2.5 rpm.

### [Composite Modulus of Elasticity]

After the curable resin composition was defoamed at 70 mmHg, it was loaded into a mold having a 10 mm-wide, 50 mm-long, and 2 mm-deep cavity, and after pressure curing for 60 min. under conditions of 150°C and 2.5 MPa was completed, the obtained cured specimen was subjected to secondary heat treatment in an oven for 2 hours at 180°C. The composite modulus of elasticity of the obtained specimen at 25°C was measured with the use of the ARES viscoelasticity tester (the product of Rheometric Scientific Co. , Model RDA 700). Measurement was carried out under the following conditions: twist 0.5%; frequency 1 Hz.

### [Adhesive Properties]

The curable resin composition was applied in an amount of about 1 cm³ onto adherends {a glass plate (a float glass plate, the product of Paltec Co., Ltd.); an aluminum plate (A1050P, the product of Paltec Co., Ltd.); a nickel plate (SPCC-SB, the product of Paltec Co., Ltd.); a copper plate (C1100P, the product of Paltec Co., Ltd.); a gold-plated plate (C2801P, the product of Nippon Test Panel Co., Ltd.); a polyimide film (Upilex, the product of Ube Industries Co., Ltd., thickness 125 µm)}. The units were heated in an oven for 2 hours at 125°C and then in an oven for another 2 hours at 180°C. As a result, specimens for evaluating adhesive properties were produced. The cured coatings were separated from the specimens by mean of a dental spatula, and the separation conditions were designated as follows:
CF: separation with fracture of the coating material,
TCF: separation with a thin residual layer left on the interface,
AF: complete separation through interface.

### [Application Example 1]

A four-neck flask equipped with a stirrer was filled with 81.3 g (0.24 mol) of 1,1,5,5-tetramethyl-3,3-diphenyltrisiloxane, 100 g of toluene, and 0.025 g of a platinum-1,3-divinyl-1,1,3,3-tetramethyldisiloxane complex (concentration of metal platinum was 4 wt.%). The contents were heated to 80°C, and 79.1 g (0.59 mol) of 2-allylphenol were added dropwise. A reaction was carried out for 2 hours at 120°C. After the reaction mixture was stripped under a reduced pressure, 142.6 g of a brown liquid having a viscosity of 3,500 mPa·s were produced with yield of 96.8%. ¹³C-Nuclear Magnetic Resonance Analysis (hereinafter referred to as NMR analysis) and ²⁹Si-NMR analysis showed that the product was an organotrisiloxane represented by the following formula:

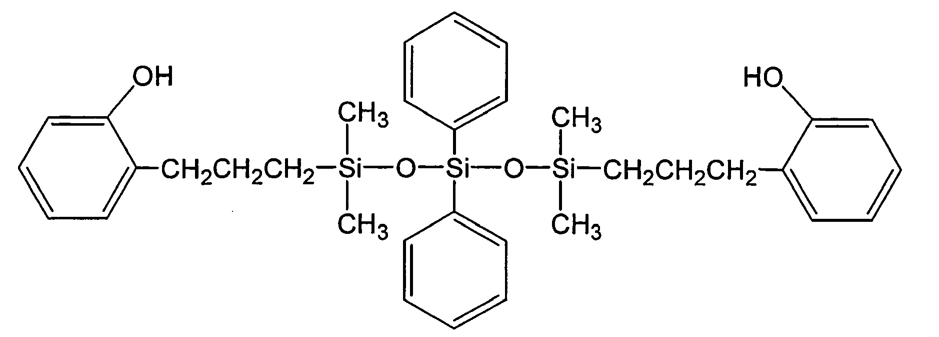

### [Application Example 2]

A four-neck flask equipped with a stirrer was filled with 287.4 g (0.86 mol) of 1,1,5,5-tetramethyl-3,3-diphenyltrisiloxane, 160 g of toluene, and 0.06 g of a platinum-1,3-divinyl-1,1,3,3-tetramethyldisiloxane complex (concentration of metal platinum was 4 wt.%). The contents were heated to 80°C, and 312.6 g (1.90 mol) of eugenol were added dropwise. A reaction was carried out for 2 hours at 120°C. After the reaction mixture was stripped under a reduced pressure, 564 g of a brown transparent liquid having a viscosity of 2,700 mPa·s were produced with yield of 98.7%. ¹³C-NMR and ²⁹Si-NMR analyses showed that the product was an organotrisiloxane represented by the following formula:

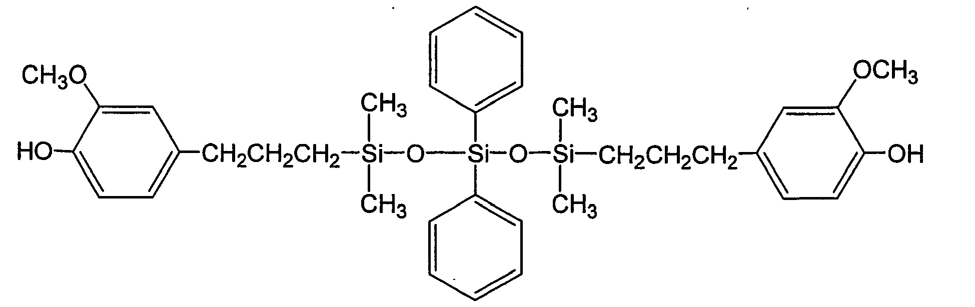

### [Application Example 3]

A curable epoxy resin composition was prepared by uniformly mixing 16.0 parts by weight of a liquid bisphenol A type epoxy resin (Epikote 828, the product of Japan Epoxy Resin Co., Ltd.; epoxy equivalent =190), 22.0 parts by weight of the trisiloxane obtained in Application Example 1, 1.0 part by weight of a capsule type amine catalyst (HX-3088, the product of Asahi Chemical Industry Co., Ltd., amine catalyst content = 40 wt.%), 60.0 parts by weight of a fine spherical amorphous silica powder (Admafine, the product of Admatechs Co., Inc. ; average particle diameter = 1.5 µm), and 1 part by weight of 3-glycidoxypropyl-trimethoxysilane. Results of evaluation of the appearance and viscosity of the obtained curable epoxy resin composition as well as the composite modulus of elasticity and adhesive properties measured in a cured body are given in Table 1.

### [Application Example 4]

A curable epoxy resin composition was prepared by uniformly mixing 16.0 parts by weight of a liquid bisphenol A type epoxy resin (Epikote 828, the product of Japan Epoxy Resin Co., Ltd.; epoxy equivalent =190), 22.0 parts by weight of the trisiloxane obtained in Application Example 2, 1.0 part by weight of a capsule type amine catalyst (HX-3088, the product of Asahi Chemical Industry Co., Ltd. , amine catalyst content = 40 wt.%), 60.0 parts by weight of a fine spherical amorphous silica powder (Admafine, the product of Admatechs Co., Inc., average particle diameter =1.5 µm), and 1 part by weight of 3-glycidoxypropyl-trimethoxysilane. Results of evaluation of the appearance and viscosity of the obtained curable epoxy resin composition as well as the composite modulus of elasticity and adhesive properties measured in a cured body are given in Table 1.

### [Comparative Example 1]

A curable epoxy resin composition was prepared by uniformly mixing 9.0 parts by weight of a liquid bisphenol A type epoxy resin (Epikote 828, the product of Japan Epoxy Resin Co., Ltd.; epoxy equivalent =190), 29.0 parts by weight of a polydimethylsiloxane represented by the following average structural formula: 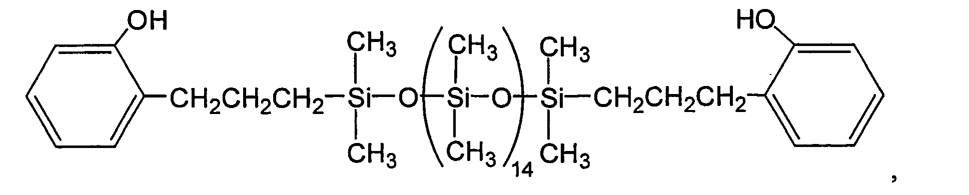 1.0 part by weight of a capsule type amine catalyst (HX-3088, the product of Asahi Chemical Industry Co., Ltd., amine catalyst content = 40 wt.%), 60.0 parts by weight of a fine spherical amorphous silica powder (Admafine, the product of Admatechs Co., Inc.; average particle diameter = 1.5 µm), and 1 part by weight of 3-glycidoxypropyl-trimethoxysilane. Results of evaluation of the appearance and viscosity of the obtained curable epoxy resin composition as well as the composite modulus of elasticity and adhesive properties measured in a cured body are given in Table 1.

### [Comparative Example 2]

A curable epoxy resin composition was prepared by uniformly mixing 19.0 parts by weight of a liquid bisphenol A type epoxy resin (Epikote 828, the product of Japan Epoxy Resin Co., Ltd.; epoxy equivalent =190), 19.0 parts by weight of a disiloxane represented by the following average structural formula: 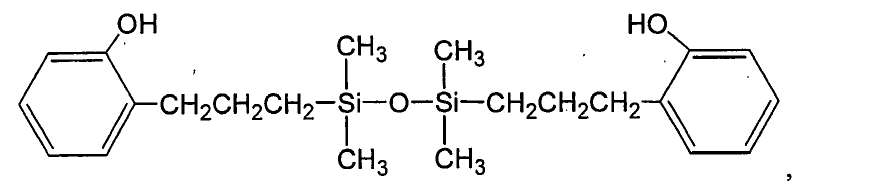 1.0 part by weight of a capsule type amine catalyst (HX-3088, the product of Asahi Chemical Industry Co., Ltd., amine catalyst content = 40 wt.%), 60.0 parts by weight of a fine spherical amorphous silica powder (Admafine, the product of Admatechs Co., Inc.; average particle diameter = 1.5 µm), and 1 part by weight of 3-glycidoxypropyl-trimethoxysilane. Results of evaluation of the appearance and viscosity of the obtained curable epoxy resin composition as well as the composite modulus of elasticity and adhesive properties measured in a cured body are given in Table 1.

### [Comparative Example 3: Preparation of Curable Epoxy Resin Composition]

A curable epoxy resin composition was prepared by uniformly mixing 22.0 parts by weight of a liquid bisphenol A type epoxy resin (Epikote 828, the product of Japan Epoxy Resin Co., Ltd.; epoxy equivalent = 190), 16.0 parts by weight of a liquid phenol-novolac resin (MEH8000, the product of Meiwa Plastic Ind., Ltd.; hydroxyl group equivalent = 141), 1.0 part by weight of a capsule type amine catalyst (HX-3088, the product of Asahi Chemical Industry Co., Ltd., amine catalyst content = 40 wt.%), 60.0 parts by weight of a fine spherical amorphous silica powder (Admafine, the product of Adomatechs Co., Inc.; average particle diameter = 1.5 µm), and 1 part by weight of 3-glycidoxypropyl-trimehoxysilane. Results of evaluation of the appearance and viscosity of the obtained curable epoxy resin composition as well as the composite modulus of elasticity and adhesive properties measured in a cured body are given in Table 1.

**[Table 1]**

| Examples | | Application Examples (Present Invention) | | Comparative Examples | | |
|---|---|---|---|---|---|---|
| Characteristics | | 3 | 4 | 1 | 2 | 3 |
| Appearance | | Compatible | Compatible | White · turbidity (Separation) | Compatible | Compatible |
| Viscosity (Pa·s) | | 148 | 104 | 171 | 65 | 200 |
| Composite Modulus of Elasticity (MPa) | | 2160 | 1950 | 80* | 1580 | 2900 |
| Adhesive Properties | Glass plate | CF | CF | CF | CF | CF |
| | Nickel | CF | CF | CF | CF | CF |
| | Copper | CF | CF | CF | CF | CF |
| | Aluminum | CF | CF | CF | CF | CF |
| | Gold | CF | CF | CF | CF | CF |
| | Polyimide resin | CF | CF | CF | CF | CF |

| | | | | | | |
|---|---|---|---|---|---|---|
| *Oil bleed is noted on the surfaces cured products; non-uniform properties. | | | | | | |

The organotrisiloxane of the present invention demonstrated good dispersibility in curable resins, imparted low viscosity to curable resin compositions, and made it possible to produce a cured product with good composite modulus of elasticity and high adhesive strength to various substrates.

### Industrial applicability

Since the organotrisiloxane of the present invention possesses good reactivity and excellent dispersibility and compatibility with respect to epoxy resins or similar curable resins, it can be used as an agent for improving properties of curable epoxy or similar curable resins. The composition of the invention demonstrates good curability and tight adherence to substrates. Therefore, the composition is suitable for use as a sealing, adhesive, or coating agent for parts of electronic and electrical devices.

## Claims

1. An organotrisiloxane represented by the following general formula: 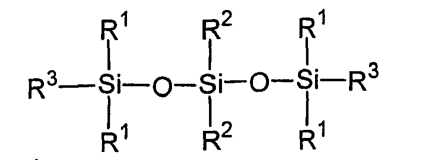 wherein R¹ and R² may be the same or different and designate optionally substituted univalent hydrocarbon groups that do not have aliphatically unsaturated bonds, with the proviso that at least one of R¹ or R² is an aryl group, and R³ designates an organic group that contains a phenolic hydroxyl group.

2. The organotrisiloxane of Claim 1, wherein R¹ in the above formula is a methyl group.

3. The organotrisiloxane of Claim 1, wherein R² in the above formula is a phenyl group.

4. The organotrisiloxane of Claim 1, wherein R³ in the above formula is a phenolic hydroxyl group containing organic group represented by the following general formula: 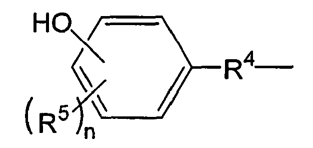 wherein R⁴ is an alkylene group, R⁵ is an alkyl or alkoxy group, and "n" is 0 or 1.

5. A method of manufacturing the organotrisiloxane of Claim 1, **characterized by** carrying out a hydrosilylation reaction between a phenolic compound that contains an aliphatically unsaturated hydrocarbon group and an organotrisiloxane represented by the following general formula: 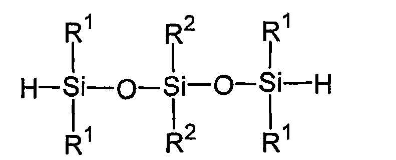 wherein R¹ and R² may be the same or different and designate optionally substituted univalent hydrocarbon groups that do not have aliphatically unsaturated bonds, with the proviso that at least one of R¹ or R² is an aryl group.

6. The method of manufacturing the organotrisiloxane of Claim 5, wherein said phenolic compound is represented by the following general formula: 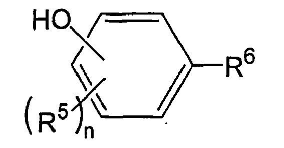 wherein R⁵ is an alkyl group or an alkoxy group, R⁶ is an alkenyl group, and "n" is 0 or 1.

7. A curable resin composition comprising: a curable resin and the organotrisiloxane as claimed in any of Claims 1 to 4.

8. The curable resin composition of Claim 7, wherein the curable resin is an epoxy resin, imide resin, or a phenol resin.

9. The curable resin composition of Claim 7, wherein the content of said organotrisiloxane is within the range of 0.01 to 100 parts by weight per 100 parts by weight of said curable resin.

10. A cured product obtained by curing the curable resin composition of Claim 7.

## Patentansprüche

1. Organotrisiloxan, das durch die folgende allgemeine Formel dargestellt wird: 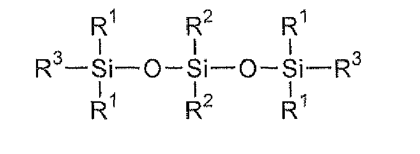 worin R¹ und R² gleich oder unterschiedlich sein Könnten und optional substituierte einbindige Kohlenwasserstoffgruppen bezeichnet, die keine aliphatisch ungesättigten Bindungen aufweisen, unter der Voraussetzung, dass mindestens eines von R¹ oder R² eine Arylgruppe ist, und R³ eine organische Gruppe bezeichnet, die eine phenolische Hydroxylgruppe enthält.

2. Organotrisiloxan nach Anspruch 1, worin R¹ in der obigen Formel eine Methylgruppe ist.

3. Organotrisiloxan nach Anspruch 1, worin R² in der obigen Formel eine Phenylgruppe ist.

4. Organotrisiloxan nach Anspruch 1, worin R³ in der obigen Formel eine phenolische Hydroxylgruppe ist, die eine organische Gruppe enthält, die durch die folgende allgemeine Formel dargestellt ist: 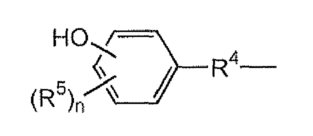 worin R⁴ eine Alkylengruppe ist, R⁵ eine Alkyl- oder Alkoxygruppe ist und "n" gleich 0 oder 1 ist.

5. Verfahren zur Herstellung des Organotrisiloxans nach Anspruch 1, gekenntzeichnet durch Durchführung einer Hydrosilylierungsreaktion zwischen einer phenolischen Verbindung, die eine aliphatisch ungesättigte Kohlenwasserstoffgruppe enthält, und einem Organotrisiloxan, das durch die folgende allgemeine Formel dargestellt ist: 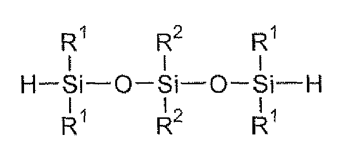 worin R¹ und R² gleich oder unterschiedlich sein könnten und optional substituierte einbindige Kohlenwasserstoffgruppen bezeichnen, die keine aliphatisch ungesättigten Bindungen aufweisen, unter der Voraussetzung, dass mindestens eines von R¹ oder R² eine Arylgruppe ist.

6. Verfahren zur Herstellung des Organotrisiloxans nach Anspruch 5, wobei diese phenolischen Verbindung durch die folgende allgemeine Formel dargestellt ist: 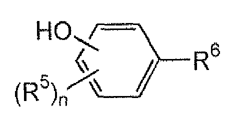 worin R⁵ eine Alkylgruppe oder eine Alkoxygruppe ist, R⁶ eine Alkenylgruppe ist und "n" gleich 0 oder 1 ist.

7. Härtbare Harzzusammensetzung, enthaltend: ein härtbares Harz und das Organotrisiloxan wie in einem der Ansprüche 1 bis 4 beansprucht.

8. Härtbare Harzzusammensetzung nach Anspruch 7, worin das härtbare Harz ein Epoxyharz, Imidharz oder ein Phenolharz ist.

9. Härtbare Harzzusammensetzung nach Anspruch 7, wobei der Gehalt dieses Organotrisiloxans innerhalb des Bereichs von 0,01 bis 100 Gewichtsteilen pro 100 Gewichtsteile dieses härtbaren Harzes liegt.

10. Gehärtetes Produkt, das durch Härten der härtbaren Harzzusammensetzung nach Anspruch 7 erhalten wird.

## Revendications

1. Organotrisiloxane représenté par la formule générale suivante : 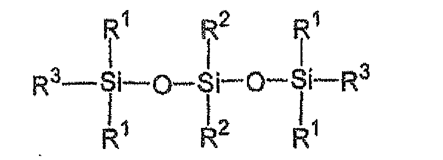 dans laquelle R¹ et R² peuvent être identiques ou différents et désignent des groupes hydrocarbonés monovalents éventuellement substitués n'ayant pas de liaisons à insaturation aliphatique, à la condition qu'au moins l'un de R¹ et R² soit un groupe aryle, et R³ désigne un groupe organique contenant un groupe hydroxyle phénolique.

2. Organotrisiloxane selon la revendication 1, dans lequel R¹ dans la formule ci-dessus est un groupe méthyle.

3. Organotrisiloxane selon la revendication 1, dans lequel R² dans la formule ci-dessus est un groupe phényle.

4. Organotrisiloxane selon la revendication 1, dans lequel R³ dans la formule ci-dessus est un groupe organique contenant un groupe hydroxyle phénolique, représenté par la formule générale suivante : 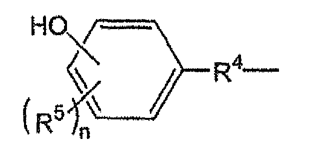 dans laquelle R⁴ est un groupe alkylène, R⁵ est un groupe alkyle ou alcoxy, et "n" vaut 0 ou 1.

5. Procédé pour fabriquer l'organotrisiloxane de la revendication 1, **caractérisé par** la mise en oeuvre d'une réaction d'hydrosilylation entre un composé phénolique contenant un groupe hydrocarboné à insaturation aliphatique et un organotrisiloxane représenté par la formule générale : 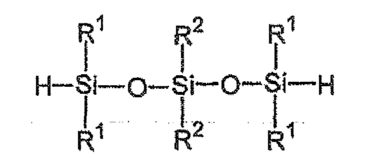 dans laquelle R¹ et R² peuvent être identiques ou différents et désignent des groupes hydrocarbonés monovalents éventuellement substitués n'ayant pas de liaisons à insaturation aliphatique, à la condition qu'au moins l'un de R¹ et R² soit un groupe aryle.

6. Procédé pour fabriquer l'organotrisiloxane selon la revendication 5, dans lequel ledit composé phénolique est représenté par la formule générale suivante : 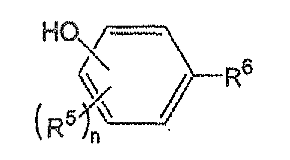 dans laquelle R⁵ est un groupe alkyle ou un groupe alcoxy, R⁶ est un groupe alcényle, et "n" vaut 0 ou 1.

7. Composition de résine durcissable comprenant une résine durcissable et l'organotrisiloxane tel que revendiqué dans l'une quelconque des revendications 1 à 4.

8. Composition de résine durcissable selon la revendication 7, dans laquelle la résine durcissable est une résine époxy, une résine d'imide, ou une résine phénolique.

9. Composition de résine durcissable selon la revendication 7, dans laquelle la teneur en ledit organotrisiloxane est située dans la plage allant de 0,01 à 100 parties en poids pour 100 parties en poids de ladite résine durcissable.

10. Produit durci obtenu par durcissement de la composition de résine durcissable de la revendication 7.
